# FASCICULE DE BREVET EUROPEEN

(11) **EP 1 505 042 B1**
(45) Date de publication et mention de la délivrance du brevet: **25.12.2013**
(21) Numéro de dépôt: 04291991.0
(22) Date de dépôt: 04.08.2004
(51) Int. Cl.: C23C 30/00, C04B 35/486

(54) **Composition de barrière thermique, pièce mécanique en superalliage munie d'un revêtement ayant une telle composition, revêtement de céramique, et procédé de fabrication du revêtement**
Wärmedämmzusammensetzung, Gegenstand aus Superlegierung beschichtet mit dieser Wärmedämmzusammensetzung und einer Keramikschicht, und Verfahren zur Herstellung der Beschichtung
Thermal barrier composition, superalloy mechanical part coated with the thermal barrier coating and a ceramic coating, and method of making the coating

(30) Priorité: 07.08.2003 FR 0309743
(43) Date de publication de la demande: 09.02.2005
(73) Titulaire: SNECMA, 75015 Paris (FR)
(72) Inventeur: Leclercq, Bérangère, 94800 Villejuif (FR); Mevrel, Rémy, 92350 Le Plessis Robinson (FR); Azzopardi, Alban, 75005 Paris (FR); Malie, André, 86100 Chatellerault (FR); Saint-Ramond, Bertrand, 77300 Fontainebleau (FR)
(74) Mandataire: Cardy, Sophie Marie

(56) Documents cités:
- EP-A- 1 321 541
- US-A- 5 302 465
- LECLERCQ, BERANGERE ET AL: "Thermal conductivity of zirconia-based ceramics for thermal barrier coatings" ADVANCES IN SCIENCE AND TECHNOLOGY (FAENZA, ITALY) (2003), 32(10TH INTERNATIONAL CERAMICS CONGRESS, 2002, PART C), 365-372, 1 janvier 2002 (2002-01-01), XP008029240
- RAGHAVAN S ET AL: "Thermal properties of zirconia co-doped with trivalent and pentavalent oxides" ACTA MATERIALIA, 8 JAN. 2001, ELSEVIER, UK, vol. 49, no. 1, 1 août 2001 (2001-08-01), pages 169-179, XP002275560 ISSN: 1359-6454
- DAE-JOON KIM ET AL: "Phase stability and physical properties of cubic and tetragonal ZrO/sub 2/ in the system ZrO/sub 2/-Y/sub 2/O/sub 3/-Ta/sub 2/O/sub 5/" JOURNAL OF THE AMERICAN CERAMIC SOCIETY, DEC. 1991, USA, vol. 74, no. 12, 1 décembre 1991 (1991-12-01), pages 3061-3065, XP002275561 ISSN: 0002-7820
- PATENT ABSTRACTS OF JAPAN vol. 2002, no. 04, 4 août 2002 (2002-08-04) & JP 2001 348655 A (MITSUBISHI HEAVY IND LTD), 18 décembre 2001 (2001-12-18)

## Description

L'invention concerne un revêtement de céramique comprenant une composition de barrière thermique de faible conductivité thermique, une pièce mécanique en superalliage protégée par un tel revêtement de céramique et un procédé de fabrication de ce revêtement de céramique.

La recherche de l'augmentation du rendement des turbomachines, en particulier dans le domaine aéronautique, et de la diminution de la consommation en carburant et des émissions polluantes de gaz et d'imbrûlés ont conduit à se rapprocher de la stoechiométrie de combustion du carburant. Cette situation s'accompagne d'une augmentation de la température des gaz sortant de la chambre de combustion en direction de la turbine.

En conséquence, il a fallu adapter les matériaux de la turbine à cette élévation de température, en perfectionnant les techniques de refroidissement des aubes de turbines (aubes creuses) et/ou en améliorant les propriétés de résistance aux températures élevées de ces matériaux. Cette deuxième voie, en combinaison avec l'utilisation des superalliages à base de nickel et/ou de cobalt, a conduit à plusieurs solutions parmi lesquelles le dépôt d'un revêtement isolant thermique dénommé barrière thermique.

Ce revêtement de céramique permet de créer sur une pièce refroidie, en régime permanent de fonctionnement, un gradient thermique au travers du revêtement, dont l'amplitude totale peut dépasser 200°C pour un revêtement de 150 µm d'épaisseur environ. La température de fonctionnement du métal sous-jacent formant le substrat pour le revêtement se trouve diminuée du même gradient, ce qui induit des gains important sur le volume d'air de refroidissement nécessaire, la durée de vie de la pièce et la consommation spécifique du moteur à turbine.

Habituellement, les revêtements de céramique sont déposés sur la pièce à revêtir soit par une technique de projection (en particulier projection plasma) ou de dépôt par voie physique en phase vapeur, c'est-à-dire par évaporation (en particulier par EB-PVD ou « Electron Beam Physical Vapour Deposition » formant un revêtement déposé dans une enceinte d'évaporation sous vide sous bombardement électronique).

Dans le cas d'un revêtement projeté, un dépôt d'oxyde à base de zircone est effectué par des techniques du type projection plasma, ce qui conduit à la formation d'un revêtement constitué d'un empilement de gouttelettes fondues puis trempées par choc, aplaties et empilées de façon à former un dépôt densifié de manière imparfaite d'une épaisseur généralement comprise entre 50 micromètres et 1 millimètre.

Un revêtement déposé par voie physique, et en particulier par évaporation sous bombardement électronique, engendre un revêtement constitué d'un assemblage de colonnettes dirigées sensiblement de manière perpendiculaire à la surface à revêtir, sur une épaisseur comprise entre 20 et 600 micromètres. Avantageusement, l'espace entre les colonnettes permet au revêtement de compenser efficacement les sollicitations thermomécaniques dues, aux températures de service, au différentiel de dilatation avec le substrat en superalliage. Ainsi, on obtient des pièces avec des durées de vie élevées en fatigue thermique à haute température.

Classiquement, ces barrières thermiques créent donc une discontinuité de conductivité thermique entre le revêtement extérieur de la pièce mécanique, comprenant cette barrière thermique, et le substrat de ce revêtement formant le matériau constitutif de la pièce.

De manière habituelle, on constate que les barrières thermiques qui engendrent une discontinuité importante de conductivité thermique sont en contrepartie génératrices d'un risque de délaminage important entre le revêtement et le substrat, ou plus précisément à l'interface entre la sous-couche et la barrière thermique en céramique.

Actuellement, on cherche à obtenir des compositions de barrières thermiques qui permettent une résistance des pièces mécaniques jusqu'à une température d'environ 1500°C en surface, soit environ jusqu'à 1300°C dans le substrat. Les barrières thermiques actuellement utilisées permettent une résistance des pièces mécaniques jusqu'à une température d'environ 1200-1300°C en surface, soit 1000-1100°C dans le substrat.

Il est connu de recourir à l'utilisation d'une barrière thermique obtenue à partir du matériau de base constitué de zircone qui présente un coefficient de dilatation proche du superalliage constituant le substrat et une conductivité thermique assez faible.

La demande de brevet FR2798864 a proposé de recourir à l'utilisation d'oxyde de dysprosium dans la zircone. Cette solution permet de réduire la conductivité thermique de la barrière thermique.

La présente invention a pour objectif de fournir un revêtement de céramique présentant une nouvelle composition de barrière thermique à base de zircone permettant d'obtenir un revêtement de barrière thermique de plus faible conductivité thermique que la zircone yttriée habituellement utilisée pour les barrières thermiques (ou que la composition de FR2798864), tout en augmentant les propriétés de résistance thermomécanique et de stabilité thermique de cette zircone yttriée (ou de la composition de FR2798864).

La présente invention a donc pour objectif de fournir un revêtement de céramique présentant une nouvelle composition de barrière thermique à base de zircone permettant d'obtenir un revêtement de barrière thermique ayant une conductivité thermique réduite sans affecter la résistance thermomécanique pour des températures d'utilisation comprises entre 1100 et 1500°C.

L'idée à la base de la présente invention est de considérer qu'il existe une relation entre la baisse des qualités, notamment en termes de résistance thermomécanique, du revêtement issu de la barrière thermique et de l'augmentation du nombre de lacunes d'oxygène dans le réseau cristallin de la céramique.

En conséquence, il est proposé de maintenir un taux élevé de défauts ponctuels dans la composition de barrière thermique, en limitant toutefois le nombre de lacunes à une valeur qui permette de stabiliser, au moins partiellement la zircone.

En effet, le nombre de lacunes d'oxygène est fondamental pour stabiliser la zircone dans sa variété allotropique tétragonale t'. En particulier, un taux d'environ 24% en masse (12% molaire) d'oxyde d'yttrium Y₂O₃ est requis pour stabiliser complètement l'oxyde de zirconium ZrO₂, tandis qu'un taux de 6 à 8% en masse (3 à 4% molaire) d'oxyde d'yttrium Y₂O₃ est nécessaire pour stabiliser partiellement l'oxyde de zirconium ZrO₂ à un niveau qui corresponde à la résistance thermomécanique la plus élevée (on effectue une mesure de la durée de vie du revêtement en la soumettant à des cycles de montée-descente en température, ce test étant dénommé cyclage thermique).

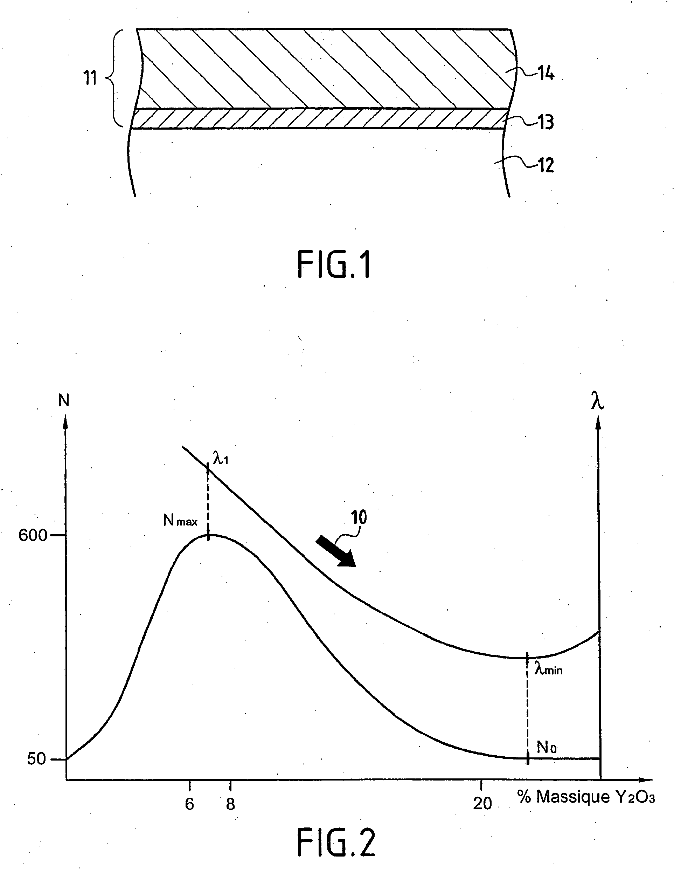

Ceci ressort de la figure 2 sur laquelle sont représentées, en fonction de la teneur en oxyde d'yttrium (% massique) dans la zircone, la courbe (en haut à droite) relative à la conductivité thermique λ et la courbe (en bas) relative à la tenue mécanique des barrières thermiques (N représentant le nombre maximal de cycles pour lequel le revêtement réalisé à partir de la barrière thermique présente des qualités mécaniques acceptables à l'issue d'un cyclage thermique).

Lorsque la zircone ZrO₂ est entièrement stabilisée (24% en masse ou 12% molaire d'oxyde d'yttrium Y₂O₃), le nombre de lacunes d'oxygène est maximal et on obtient la conductivité thermique minimale λₘᵢₙ mais également une baisse de la résistance aux contraintes thermomécaniques de la céramique déposée par projection plasma ou évaporation (N₀ inférieur à Nₘₐₓ sur la figure 2).

Lorsque la zircone ZrO₂ est partiellement stabilisée (entre 6 et 8% en masse ou entre 3 et 4% molaire d'oxyde d'yttrium Y₂O₃), on constate une résistance maximale (Nₘₐₓ sur la figure 2) aux contraintes thermomécaniques de la céramique, mais une importante augmentation de la conductivité thermique (λ₁ supérieur à λₘᵢₙ sur la figure 2) du fait d'un nombre de lacunes d'oxygène moindre, ou plus généralement, à un nombre moins important de défauts dans le réseau cristallin.

L'utilisation d'autres stabilisants que l'oxyde d'yttrium, conduit aux mêmes constatations.

La très bonne résistance en cyclage thermique de la zircone partiellement stabilisée est attribuée à sa structure tétragonale métastable t' qui se transforme aux conditions typiques de condition en service en une structure biphasée très fine [S. Alpérine, L. Lelait, « Microstructural investigations of plasma-sprayed yttria partially stabilized zirconia TBC in relation with thermomechanical resistance and high temperature oxidation mechanisms », Proc. 37th ASME International Gas Turbine and Aeroengine Congres, Köln, ASME 92-GT-317 (1992)].

Or, cette structure t' est directement liée à la teneur en lacunes d'oxygène dans le réseau de la zircone et c'est pourquoi on pense que ZrO₂ + 6 à 8% massique (3 à 4% molaire) d'Y₂O₃ engendre une structure cristalline t' métastable du fait du nombre correspondant de lacunes d'oxygène dans le réseau.

S'agissant des moyens de parvenir à abaisser la conductivité thermique λ_{réel} du revêtement, on considère qu'elle se situe à une valeur comprise entre λᵢₙₜᵣ du matériau céramique dense et λₐᵢᵣ de l'air, puisque les revêtements de barrière thermique sont des couches céramiques poreuses formant un assemblage hétérogène de deux milieux conducteurs de la chaleur (matériau céramique et pores ou microfissures du revêtement remplies d'air en condition de service).

Une première solution pour obtenir un revêtement de faible conductivité thermique consiste à utiliser une céramique dont la composition céramique est classique, et à modifier la morphologie du revêtement, c'est-à-dire la proportion, la répartition et l'orientation de pores et microfissures du revêtement, ou bien l'arrangement de la matière sous forme de colonnettes ou de strates, de façon à diminuer λ_{réel}. Il est possible de parvenir à ce résultat en modifiant les paramètres de dépôt du revêtement.

Une deuxième solution consiste à chercher, en modifiant la composition chimique du revêtement, à diminuer directement λᵢₙₜᵣ, sans altérer sa morphologie, tout en conservant les autres propriétés du revêtement. Il est bien connu par exemple que l'introduction d'yttrine dans la zircone abaisse la conductivité thermique par la déformation du réseau (rayon atomique Y > rayon atomique Zr) et l'introduction de lacunes d'oxygène dans le réseau du fait des valences différentes des ions de zirconium et d'yttrium. De manière générale, l'introduction de défauts ponctuels dans le réseau, qui agissent comme des centres de rétrodiffusion des phonons, contribue à réduire la conductivité thermique.

Une telle solution est présentée notamment dans l'article de LECLERCQ, Bérangère et al : "Thermal conductivity of zirconia-based ceramics for thermal barrier coatings" ADVANCES IN SCIENCE AND TECHNOLOGY (FAENZA, ITALY) (2003), 32 (10TH INTERNATIONAL CERAMICS CONGRESS, 2002, PART C), 365-372, 1er janvier 2002 (2002-01-01).

C'est cette voie qui est également mise en oeuvre dans la présente invention.

En effet, afin de parvenir aux objectifs précités, la présente invention porte sur un revêtement de céramique selon la revendication 1.

En effet, l'introduction de l'oxyde trivalent s'accompagne de l'incorporation de lacunes d'oxygène permettant de stabiliser la zircone. Plus précisément, pour deux cations trivalents introduits, une lacune d'oxygène est nécessairement introduite pour préserver la neutralité électrique de la zircone. Toutefois, pour éviter une trop grande incorporation de lacunes, qui peuvent s'ordonner et provoquer une augmentation de la conductivité thermique, et pour pouvoir ajuster la stabilisation de la zircone, on règle la concentration en lacunes d'oxygène par l'introduction d'oxydes pentavalents. En effet, l'introduction de deux cations pentavalents s'accompagne de la disparition d'une lacune d'oxygène, également pour préserver la neutralité électrique de la zircone.

De cette manière, on comprend que l'on peut introduire un grand nombre de défauts ponctuels (les cations des oxydes trivalents et pentavalents qui rentrent en substitution d'ions Zr⁴⁺), ce qui est favorable à la diminution de la conductivité thermique, tout en ajustant le taux de lacunes d'oxygène pour le maintenir à une valeur correspondant au taux de stabilisation recherché de la zircone (zircone partiellement stabilisée).

De préférence, on prévoit donc que ledit oxyde trivalent est présent avec une proportion molaire constituée d'une première partie permettant de stabiliser partiellement la zircone et d'une deuxième partie qui introduit des défauts ponctuels dans le réseau et on prévoit que ledit oxyde pentavalent est présent avec une proportion molaire égale à ladite proportion molaire de ladite deuxième partie de l'oxyde trivalent.

Ainsi, grâce à cette disposition préférentielle, on dispose d'une composition de barrière thermique qui permet à la fois d'obtenir une bonne durée de vie (taux de lacunes d'oxygène correspondant à la structure t' métastable de la zircone qui assure une bonne résistance thermomécanique ; Nmax sur la figure 2) et une conductivité thermique minimale (qui se rapproche de λₘᵢₙ sur la figure 2, voir la flèche 10) par la présence de nombreux défauts ponctuels.

La présente invention porte aussi sur une pièce mécanique en superalliage, caractérisée en ce qu'elle comporte un revêtement de céramique ayant une composition du type précité.

Selon l'invention, la pièce mécanique comporte une sous-couche de liaison sur laquelle sont déposées les couches de céramique.

De cette manière, on obtient, selon l'invention, un revêtement de barrière thermique qui réalise un premier gradient thermique au travers de la première couche de céramique et un deuxième gradient thermique au travers de la deuxième couche de céramique.

La présente invention porte également sur un procédé de fabrication d'un revêtement de céramique comprenant une barrière thermique sur un substrat en superalliage selon la revendication 11.

D'autres avantages et caractéristiques de l'invention ressortiront à la lecture de la description suivante faite à titre d'exemple et en référence aux dessins annexés dans lesquels :
- la figure 1 est une vue en coupe schématique montrant partiellement une pièce mécanique revêtue d'une barrière thermique et
- la figure 2, déjà décrite, est une représentation des courbes relatives à la conductivité thermique et à la tenue mécanique de barrières thermiques en fonction de la teneur en oxyde d'yttrium dans la zircone.

La pièce mécanique représentée sur la figure 1 comporte un revêtement de barrière thermique 11 déposé sur un substrat 12 en superalliage, tel que les superalliages à base de nickel et/ou de cobalt. Le revêtement de barrière thermique 11 comporte une sous-couche métallique 13 déposée sur le substrat 12, et une couche de céramique 14 de composition conforme à l'invention, déposée sur la sous-couche 13.

La sous-couche 13 peut être un alliage alumino-formeur résistant à l'oxydo-corrosion tel qu'un alliage apte à former une couche d'alumine protectrice par oxydation, un alliage de type MCrAlY (M étant un métal choisi parmi le nickel, le cobalt, le fer ou un mélange de ces métaux) ou un aluminiure de nickel ou de cobalt modifié ou non par l'adjonction d'un métal choisi parmi le platine, le chrome, le palladium, le ruthénium, l'iridium, l'osmium, le rhodium ou d'un mélange de ces métaux et/ou un élément réactif choisi parmi le zirconium (Zr), le hafnium (Hf) et l'yttrium (Y).

La couche de céramique 14 est constituée d'une base de zircone, d'un oxyde trivalent et d'un oxyde pentavalent.

L'oxyde trivalent permet, en stabilisant la zircone, d'améliorer sa résistance thermomécanique : on privilégie une résistance thermomécanique maximale, à savoir une zircone partiellement stabilisée, donc un oxyde trivalent R203 présent avec une teneur totale supérieure à une valeur comprise entre 4 et 8% en masse (2 et 4% molaire) (on distingue une première partie égale à une valeur comprise entre 4 et 8% en masse ou entre 2 et 4% molaire et une deuxième partie).

A cette composition de base (zircone partiellement stabilisée comprenant la première partie de l'oxyde trivalent, soit entre 2 et 4% molaire d'oxyde trivalent), on ajoute un nombre équivalent de moles d'oxyde trivalent et de moles d'oxyde pentavalent. Cet ajout permet d'introduire un nombre de défauts ponctuels important, afin de faire chuter la conductivité thermique sans altérer la résistance thermomécanique car le taux de lacunes d'oxygène est resté constant.

Ledit oxyde trivalent est choisi dans le groupe comportant l'oxyde d'yttrium, l'oxyde de scandium, l'oxyde de dysprosium, l'oxyde d'ytterbium, l'oxyde d'erbium, l'oxyde de gadolinium, l'oxyde d'europium, l'oxyde de samarium, l'oxyde de néodyme, l'oxyde de praséodyme, l'oxyde de lanthane, l'oxyde de terbium, l'oxyde d'holmium et leurs mélanges, avec une préférence pour l'oxyde d'yttrium.

Ledit oxyde pentavalent est choisi dans le groupe comportant l'oxyde de niobium, l'oxyde de tantale et leurs mélanges.

Avantageusement, ledit oxyde trivalent est présent dans une proportion molaire comprise entre 4 et 30% et ledit oxyde pentavalent est présent dans une proportion molaire comprise entre 2 et 20%, de préférence entre 4 et 12%, et préférentiellement entre 3 et 10%.

Selon un mode de réalisation préférentiel de la composition de barrière thermique selon l'invention, l'écart entre la proportion molaire de l'oxyde trivalent et la proportion molaire de l'oxyde pentavalent est compris entre 4% et 12%, de préférence sensiblement égal à 4%.

Ces conditions correspondent à l'application du principe selon lequel ledit oxyde trivalent est présent avec une proportion molaire constituée d'une première partie permettant de stabiliser partiellement la zircone et d'une deuxième partie qui introduit des défauts ponctuels dans le réseau et en ce que ledit oxyde pentavalent est présent avec une proportion molaire égale à ladite proportion molaire de ladite deuxième partie de l'oxyde trivalent.

En effet, dans ce cas, ladite première partie de la proportion molaire de l'oxyde trivalent est comprise entre 4 et 12%, et de préférence sensiblement égale à 4%, soit à la teneur permettant l'obtention d'une zircone partiellement stabilisée.

Egalement, ladite deuxième partie de la proportion molaire de l'oxyde trivalent dépasse la proportion molaire de cette première partie d'une quantité qui est sensiblement égale à celle de la proportion molaire de l'oxyde pentavalent.

Selon l'invention, la pièce mécanique en superalliage illustrée sur la figure 1 est modifiée par le fait que (cas de figure non représenté) le revêtement de céramique 11 comporte en outre, sur ladite sous-couche 13, une première couche de céramique à base de zircone yttriée comprenant une teneur molaire d'oxyde d'yttrium entre 4 et 12%.

De cette manière, on forme le revêtement en ajoutant, au dessus d'une première couche de céramique de zircone yttriée utilisée de manière classique (zircone partiellement stabilisée), une deuxième couche de céramique réalisée selon la composition précitée.

Selon l'invention, on propose également un procédé de fabrication d'un revêtement de céramique comprenant une barrière thermique sur un substrat en superalliage, qui comporte les étapes suivantes :
- déposer une sous-couche de liaison sur ledit substrat en superalliage,
- déposer sur ladite sous-couche, une première couche de céramique à base de zircone yttriée comprenant une teneur molaire d'oxyde d'yttrium entre 4 et 12 %, et
- déposer sur ladite première couche de céramique, une deuxième couche de céramique comportant une base de zircone, au moins un oxyde trivalent (ou un mélange d'oxydes trivalents), permettant de stabiliser, de préférence partiellement, la zircone et de réduire la conductivité thermique de la zircone de manière optimale, et au moins un oxyde pentavalent (ou un mélange d'oxydes pentavalents) permettant de diminuer le taux de lacunes d'oxygène pour le ramener sensiblement à celui d'une zircone partiellement stabilisée.

A cet effet, avantageusement, ledit oxyde trivalent est présent avec une proportion molaire constituée d'une première partie permettant de stabiliser partiellement la zircone et d'une deuxième partie qui introduit des défauts ponctuels dans le réseau et en ce que ledit oxyde pentavalent est présent avec une proportion molaire égale à ladite proportion molaire de ladite deuxième partie de l'oxyde trivalent.

Selon le procédé de l'invention, ledit oxyde trivalent est choisi dans le groupe comportant l'oxyde d'yttrium, l'oxyde de scandium, l'oxyde de dysprosium, l'oxyde d'ytterbium, l'oxyde d'erbium, l'oxyde de gadolinium, l'oxyde d'europium, l'oxyde de samarium, l'oxyde de néodyme, l'oxyde de praséodyme, l'oxyde de lanthane, l'oxyde de terbium, l'oxyde d'holmium et leurs mélanges.

Egalement, ledit oxyde pentavalent est choisi dans le groupe comportant l'oxyde de niobium, l'oxyde de tantale et leurs mélanges.

Avantageusement, ledit oxyde trivalent est présent dans une proportion molaire comprise entre 4 et 30 et ledit oxyde pentavalent est présent dans une proportion molaire comprise entre 2 et 20%, de préférence entre 4 et 12%, et préférentiellement entre 3 et 10%.

Ce procédé est mis en oeuvre de préférence avec un écart entre la proportion molaire de l'oxyde trivalent et la proportion molaire de l'oxyde pentavalent qui est compris entre 4% et 12%, de préférence sensiblement égal à 4%.

Selon une alternative de réalisation du procédé de fabrication selon l'invention, il comporte une étape supplémentaire consistant à oxyder la sous-couche de liaison préalablement au dépôt des couches de céramique.

## Revendications

1. Revêtement de céramique (11) comportant une sous-couche de liaison (13), une première couche de céramique à base de zircone yttriée comprenant une teneur molaire d'oxyde d'yttrium entre 4 et 12% et une deuxième couche de céramique (14) présentant une composition de barrière thermique de faible conductivité thermique et de forte résistance thermomécanique en céramique comportant une base de zircone, au moins un oxyde trivalent choisi dans le groupe comportant l'oxyde d'yttrium, l'oxyde de scandium, l'oxyde de dysprosium, l'oxyde d'ytterbium, l'oxyde d'erbium, l'oxyde de gadolinium, l'oxyde d'europium, l'oxyde de samarium, l'oxyde de néodyme, l'oxyde de praséodyme, l'oxyde de lanthane, l'oxyde de terbium, l'oxyde d'holmium et leurs mélanges, permettant de stabiliser la zircone et de réduire la conductivité thermique de la zircone de manière optimale, et au moins un oxyde pentavalent permettant de diminuer le taux de lacunes d'oxygène pour le ramener sensiblement à celui d'une zircone partiellement stabilisée, ladite première couche de céramique étant située entre ladite sous-couche de liaison (13) et ladite deuxième couche de céramique (14).

2. Revêtement de céramique (11) selon la revendication 1, **caractérisé en ce que** ledit oxyde trivalent est présent avec une proportion molaire constituée d'une première partie comprise entre 2% et 4% permettant de stabiliser partiellement la zircone et d'une deuxième partie qui introduit des défauts ponctuels dans le réseau et **en ce que** ledit oxyde pentavalent est présent avec une proportion molaire égale à ladite proportion molaire de ladite deuxième partie de l'oxyde trivalent.

3. Revêtement de céramique (11) selon l'une quelconque des revendications précédentes, **caractérisé en ce que** ledit oxyde pentavalent est choisi dans le groupe comportant l'oxyde de niobium, l'oxyde de tantale et leurs mélanges.

4. Revêtement de céramique (11) selon l'une quelconque des revendications précédentes, **caractérisé en ce que** ledit oxyde trivalent est présent dans une proportion molaire comprise entre 4 et 30%.

5. Revêtement de céramique (11) selon l'une quelconque des revendications précédentes, **caractérisé en ce que** ledit oxyde pentavalent est présent dans une proportion molaire comprise entre 2 et 20%, de préférence entre 4 et 12%, et préférentiellement entre 3 et 10%.

6. Revêtement de céramique (11) selon l'une quelconque des revendications précédentes, **caractérisé en ce que** l'écart entre la proportion molaire de l'oxyde trivalent et la proportion molaire de l'oxyde pentavalent est compris entre 4% et 12%, de préférence sensiblement égal à 4%.

7. Pièce mécanique en superalliage, **caractérisée en ce qu'**elle comporte un revêtement de céramique (11, 14) ayant une composition selon l'une quelconque des revendications précédentes.

8. Pièce mécanique en superalliage selon la revendication 7, **caractérisée en ce que** ladite sous-couche de liaison (13) est constituée d'un alliage apte à former une couche d'alumine protectrice par oxydation.

9. Pièce mécanique en superalliage selon la revendication 8, **caractérisée en ce que** ladite sous-couche de liaison (13) est constituée d'un alliagede type MCrAlY, M étant un métal choisi parmi le nickel, le cobalt, le fer ou un mélange de ces métaux.

10. Pièce mécanique en superalliage selon la revendication 8, **caractérisée en ce que** ladite sous-couche de liaison (13) est constituée d'un aluminiure de nickel contenant éventuellement un métal choisi parmi le platine, le chrome, le palladium, le ruthénium, l'iridium, l'osmium, le rhodium, ou un mélange de ces métaux et/ou un élément réactif choisi parmi le zirconium (Zr), le hafnium (Hf) et l'yttrium (Y).

11. Procédé de fabrication d'un revêtement de céramique comprenant une barrière thermique (11) sur un substrat (12) en superalliage, **caractérisé en ce qu'**il comporte les étapes suivantes :
- déposer une sous-couche de liaison (13) sur ledit substrat (12) en superalliage,
- déposer sur ladite sous-couche (13) une première couche de céramique à base de zircone yttriée comprenant une teneur molaire d'oxyde d'yttrium entre 4 et 12%, et
- déposer sur ladite première couche de céramique une deuxième couche de céramique (14) comportant une base de zircone, au moins un oxyde trivalent choisi dans le groupe comportant l'oxyde d'yttrium, l'oxyde de scandium, l'oxyde de dysprosium, l'oxyde d'ytterbium, l'oxyde d'erbium, l'oxyde de gadolinium, l'oxyde d'europium, l'oxyde de samarium, l'oxyde de néodyme, l'oxyde de praséodyme, l'oxyde de lanthane, l'oxyde de terbium, l'oxyde d'holmium et leurs mélanges, permettant de stabiliser la zircone et de réduire la conductivité thermique de la zircone de manière optimale, et au moins un oxyde pentavalent permettant de diminuer le taux de lacunes d'oxygène pour le ramener sensiblement à celui d'une zircone partiellement stabilisée.

12. Procédé de fabrication selon la revendication 11, **caractérisé en ce que** ledit oxyde trivalent est présent avec une proportion molaire constituée d'une première partie comprise entre 2% et 4% permettant de stabiliser partiellement la zircone et d'une deuxième partie qui introduit des défauts ponctuels dans le réseau et **en ce que** ledit oxyde pentavalent est présent avec une proportion molaire égale à ladite proportion molaire de ladite deuxième partie de l'oxyde trivalent.

13. Procédé de fabrication selon la revendication 11 ou 12, **caractérisé en ce qu'**il comporte une étape supplémentaire consistant à oxyder la sous-couche de liaison (13) préalablement au dépôt des couches de céramique.

14. Procédé de fabrication selon l'une quelconque des revendications 11 à 13, **caractérisé en ce que** ledit oxyde pentavalent est choisi dans le groupe comportant l'oxyde de niobium, l'oxyde de tantale et leurs mélanges.

15. Procédé de fabrication selon l'une quelconque des revendications 11 à 14, **caractérisé en ce que** ledit oxyde trivalent est présent dans une proportion molaire comprise entre 4 et 30%.

16. Procédé de fabrication selon l'une quelconque des revendications 11 à 15, **caractérisé en ce que** ledit oxyde pentavalent est présent dans une proportion molaire comprise entre 2 et 20%, de préférence entre 4 et 12%, et préférentiellement entre 3 et 10%.

17. Procédé de fabrication selon l'une quelconque des revendications 11 à 16, **caractérisé en ce que** l'écart entre la proportion molaire de l'oxyde trivalent et la proportion molaire de l'oxyde pentavalent est compris entre 4% et 12%, de préférence sensiblement égal à 4%.

## Patentansprüche

1. Keramikbeschichtung (11), umfassend eine Verbindungsunterlage (13), eine erste Keramikschicht auf der Basis von Yttrium-stabilisiertem Zirkonoxid mit einem Molgehalt an Yttriumoxid zwischen 4 und 12 %, und eine zweite Keramikschicht (14), die eine Wärmebarrierezusammensetzung mit geringer Wärmeleitfähigkeit und hohem thermomechanischen Widerstand aus Keramik aufweist, mit einer Zirkonoxidbasis, wenigstens einem dreiwertigen Oxid, ausgewählt aus der Gruppe umfassend Yttriumoxid, Scandiumoxid, Dysprosiumoxid, Ytterbiumoxid, Erbiumoxid, Gadoliniumoxid, Europiumoxid, Samariumoxid, Neodymoxid, Praseodymoxid, Lanthanoxid, Terbiumoxid, Holmiumoxid und deren Mischungen, das ermöglicht, das Zirkonoxid zu stabilisieren und die Wärmeleitfähigkeit des Zirkonoxids optimal zu verringern, sowie wenigstens einem fünfwertigen Oxid, das ermöglicht, den Grad der Sauerstoffleerstellen zu verringern, um ihn im Wesentlichen auf denjenigen eines teilstabilisierten Zirkonoxids zurückzubringen, wobei die erste Keramikschicht zwischen der Verbindungsunterlage (13) und der zweiten Keramikschicht (14) gelegen ist.

2. Keramikbeschichtung (11) nach Anspruch 1, **dadurch gekennzeichnet, dass** das dreiwertige Oxid mit einem Molanteil vorliegt, der von einem ersten Teil zwischen 2 % und 4 %, welcher ermöglicht, das Zirkonoxid teilweise zu stabilisieren, und von einem zweiten Teil, der Punktdefekte in das Gitter einbringt, gebildet ist, und dass das fünfwertige Oxid mit einem Molanteil vorliegt, der gleich dem Molanteil des zweiten Teils des dreiwertigen Oxids ist.

3. Keramikbeschichtung (11) nach einem der vorhergehenden Ansprüche, **dadurch gekennzeichnet, dass** das fünfwertige Oxid aus der Gruppe umfassend Nioboxid, Tantaloxid und deren Mischungen ausgewählt ist.

4. Keramikbeschichtung (11) nach einem der vorhergehenden Ansprüche, **dadurch gekennzeichnet, dass** das dreiwertige Oxid in einem Molanteil zwischen 4 und 30 % vorliegt.

5. Keramikbeschichtung (11) nach einem der vorhergehenden Ansprüche, **dadurch gekennzeichnet, dass** das fünfwertige Oxid in einem Molanteil zwischen 2 und 20 %, bevorzugt zwischen 4 und 12 % und vorzugsweise zwischen 3 und 10 % vorliegt.

6. Keramikbeschichtung (11) nach einem der vorhergehenden Ansprüche, **dadurch gekennzeichnet, dass** die Abweichung zwischen dem Molanteil des dreiwertigen Oxids und dem Molanteil des fünfwertigen Oxids zwischen 4 % und 12 % liegt, vorzugsweise im Wesentlichen gleich 4 % beträgt.

7. Mechanisches Teil aus Superlegierung, **dadurch gekennzeichnet, dass** es eine Keramikbeschichtung (11, 14) mit einer Zusammensetzung nach einem der vorhergehenden Ansprüche umfasst.

8. Mechanisches Teil aus Superlegierung nach Anspruch 7, **dadurch gekennzeichnet, dass** die Verbindungsunterlage (13) von einer Legierung gebildet ist, welche geeignet ist, eine Aluminiumoxidschutzschicht durch Oxidation zu bilden.

9. Mechanisches Teil aus Superlegierung nach Anspruch 8, **dadurch gekennzeichnet, dass** die Verbindungsunterlage (13) von einer Legierung vom Typ MCrAlY gebildet ist, wobei M ein Metall ist, das aus Nickel, Kobalt, Eisen oder einer Mischung dieser Metalle ausgewählt ist.

10. Mechanisches Teil aus Superlegierung nach Anspruch 8, **dadurch gekennzeichnet, dass** die Verbindungsunterlage (13) von einem Nickelaluminid gebildet ist, das eventuell ein Metall, ausgewählt aus Platin, Chrom, Palladium, Ruthenium, Iridium, Osmium, Rhodium, oder eine Mischung dieser Metalle und/oder ein reaktives Element, ausgewählt aus Zirkonium (Zr), Hafnium (Hf) und Yttrium (Y), enthält.

11. Verfahren zur Herstellung einer Keramikbeschichtung mit einer Wärmebarriere (11) auf einem Substrat (12) aus Superlegierung, **dadurch gekennzeichnet, dass** es die folgenden Schritte umfasst:
- Abscheiden einer Verbindungsunterlage (13) auf dem Substrat (12) aus Superlegierung,
- Abscheiden, auf der Unterlage (13), einer ersten Keramikschicht auf der Basis von Yttrium-stabilisiertem Zirkonoxid mit einem Molgehalt an Yttriumoxid zwischen 4 und 12 %, und
- Abscheiden, auf der ersten Keramikschicht, einer zweiten Keramikschicht (14) mit einer Zirkonoxidbasis, wenigstens einem dreiwertigen Oxid, ausgewählt aus der Gruppe umfassend Yttriumoxid, Scandiumoxid, Dysprosiumoxid, Ytterbiumoxid, Erbiumoxid, Gadoliniumoxid, Europiumoxid, Samariumoxid, Neodymoxid, Praseodymoxid, Lanthanoxid, Terbiumoxid, Holmiumoxid und deren Mischungen, das ermöglicht, das Zirkonoxid zu stabilisieren und die Wärmeleitfähigkeit des Zirkonoxids optimal zu verringern, sowie wenigstens einem fünfwertigen Oxid, das ermöglicht, den Grad der Sauerstoffleerstellen zu verringern, um ihn im Wesentlichen auf denjenigen eines teilstabilisierten Zirkonoxids zurückzubringen.

12. Herstellungsverfahren nach Anspruch 11, **dadurch gekennzeichnet, dass** das dreiwertige Oxid mit einem Molanteil vorliegt, der von einem ersten Teil zwischen 2 % und 4 %, welcher ermöglicht, das Zirkonoxid teilweise zu stabilisieren, und von einem zweiten Teil, der Punktdefekte in das Gitter einbringt, gebildet ist, und dass das fünfwertige Oxid mit einem Molanteil vorliegt, der gleich dem Molanteil des zweiten Teils des dreiwertigen Oxids ist.

13. Herstellungsverfahren nach Anspruch 11 oder 12, **dadurch gekennzeichnet, dass** es einen zusätzlichen Schritt umfasst, der darin besteht, die Verbindungsunterlage (13) vor Abscheiden der Keramikschichten zu oxidieren.

14. Herstellungsverfahren nach einem der Ansprüche 11 bis 13, **dadurch gekennzeichnet, dass** das fünfwertige Oxid aus der Gruppe umfassend Nioboxid, Tantaloxid und deren Mischungen ausgewählt ist.

15. Herstellungsverfahren nach einem der Ansprüche 11 bis 14, **dadurch gekennzeichnet, dass** das dreiwertige Oxid in einem Molanteil zwischen 4 und 30 % vorliegt.

16. Herstellungsverfahren nach einem der Ansprüche 11 bis 15, **dadurch gekennzeichnet, dass** das fünfwertige Oxid in einem Molanteil zwischen 2 und 20 %, bevorzugt zwischen 4 und 12 % und vorzugsweise zwischen 3 und 10 % vorliegt.

17. Herstellungsverfahren nach einem der Ansprüche 11 bis 16, **dadurch gekennzeichnet, dass** die Abweichung zwischen dem Molanteil des dreiwertigen Oxids und dem Molanteil des fünfwertigen Oxids zwischen 4 % und 12 % liegt, vorzugsweise im Wesentlichen gleich 4 % beträgt.

## Claims

1. A ceramic coating (11) comprising a bonding underlayer (13), a first ceramic coating based on yttrium-containing zirconia, having a molar content of yttrium oxide lying in the range 4% to 12%, and a second ceramic coating (14) presenting a thermal barrier composition of low thermal conductivity and of high high-temperature strength, made of ceramic, the composition comprising a zirconia base, at least one trivalent oxide selected from the group comprising yttrium oxide, scandium oxide, dysprosium oxide, ytterbium oxide, erbium oxide, gadolinium oxide, europium oxide, samarium oxide, neodymium oxide, praseodymium oxide, lanthanum oxide, terbium oxide, holmium oxide, and mixtures thereof, enabling the zirconia to be stabilized, and enabling the thermal conductivity of the zirconia to be reduced in optimum manner, and at least one pentavalent oxide enabling the content of oxygen vacancies to be reduced so as to make it substantially equal to that of the partially stabilized zirconia, said first ceramic layer being located between said bonding underlayer (13) and said second ceramic layer (14).

2. A ceramic coating (11) according to claim 1, **characterized in that** said trivalent oxide is present at a molar concentration constituted by a first portion lying in the range 2% to 4% enabling the zirconia to be stabilized partially, and by a second portion which introduces point defects into the lattice, and **in that** said pentavalent oxide is present at a molar concentration equal to said molar concentration of said second portion of the trivalent oxide.

3. A ceramic coating (11) according to any preceding claim, **characterized in that** said pentavalent oxide is selected from the group comprising niobium oxide, tantalum oxide, and mixtures thereof.

4. A ceramic coating (11) according to any preceding claim, **characterized in that** said trivalent oxide is present at a molar concentration lying in the range 4% to 30%.

5. A ceramic coating (11) according to any preceding claim, **characterized in that** said pentavalent oxide is present at a molar concentration lying in the range 2% to 20%, preferably in the range 4% to 12%, and more preferably in the range 3% to 10%.

6. A ceramic coating (11) according to any preceding claim, **characterized in that** the difference between the molar concentration of the trivalent oxide and the molar concentration of the pentavalent oxide lies in the range 4% to 12%, and is preferably substantially equal to 4%.

7. A superalloy machine part, **characterized in that** it includes a ceramic coating (11, 14) having a composition according to any preceding claim.

8. A superalloy machine part according to claim 7, **characterized in that** said bonding underlayer (13) is constituted by an alloy suitable for forming a protective alumina layer by oxidation.

9. A superalloy machine part according to claim 8, **characterized in that** said bonding underlayer (13) is constituted by an alloy of the MCrAlY type, where M is a metal selected from nickel, cobalt, iron, or a mixture of said metals.

10. A superalloy machine part according to claim 8, **characterized in that** said bonding underlayer (13) is constituted by a nickel aluminide optionally containing a metal selected from platinum, chromium, palladium, ruthenium, iridium, osmion, rhodium, or a mixture of these metals, and/or a reactive element selected from zirconium (Zr), hafnium (Hf), and yttrium (Y).

11. A method of fabricating a ceramic coating comprising a thermal barrier (11) on a superalloy substrate (12), the method being **characterized in that** it comprises the following steps:
- depositing a bonding underlayer (13) on said superalloy substrate (12);
- depositing on said underlayer (13) a first ceramic coating based on yttrium-containing zirconia, having a molar content of yttrium oxide lying in the range 4% to 12%; and
- depositing on said first ceramic coating a second ceramic coating (14) comprising a zirconia base, at least one trivalent oxide selected from the group comprising yttrium oxide, scandium oxide, dysprosium oxide, ytterbium oxide, erbium oxide, gadolinium oxide, europium oxide, samarium oxide, neodymium oxide, praseodymium oxide, lanthanum oxide, terbium oxide, holmium oxide, and mixtures thereof, enabling the zirconia to be stabilized and enabling the thermal conductivity of the zirconia to be reduced in optimum manner, and at least one pentavalent oxide enabling the content of oxygen vacancies to be reduced so as to make it substantially equal to that of the partially stabilized zirconia.

12. A method of fabrication according to claim 11, **characterized in that** said trivalent oxide is present at a molar concentration constituted by a first portion lying in the range 2% to 4% enabling the zirconia to be stabilized partially, and by a second portion which introduces point defects into the lattice, and **in that** said pentavalent oxide is present at a molar concentration equal to said molar concentration of said second portion of the trivalent oxide.

13. A method of fabrication according to claim 11 or claim 12, **characterized in that** it includes an additional step consisting in oxidizing the bonding underlayer (13) prior to depositing the ceramic coating.

14. A method of fabrication according to any one of claims 11 to 13, **characterized in that** said pentavalent oxide is selected from the group comprising niobium oxide, tantalum oxide, and mixtures thereof.

15. A method of fabrication according to any one of claims 11 to 14, **characterized in that** said trivalent oxide is present at a molar concentration lying in the range 4% to 30%.

16. A method of fabrication according to any one of claims 11 to 15, **characterized in that** said pentavalent oxide is present at a molar concentration lying in the range 2% to 20%, preferably in the range 4% to 12%, and more preferably in the range 3% to 10%.

17. A method of fabrication according to any one of claims 11 to 16, **characterized in that** the difference between the molar concentration of trivalent oxide and the molar concentration of pentavalent oxide lies in the range 4% to 12%, and is preferably substantially equal to 4%.
